# EUROPEAN PATENT APPLICATION

(11) **EP 2 629 217 A1**
(43) Date of publication of application: **21.08.2013**
(21) Application number: 13155353.9
(22) Date of filing: 15.02.2013
(51) Int. Cl.: G06F 17/30

(54) **Method and system for providing customized information over a network**

(30) Priority: 16.02.2012 US 201261599919 P
(71) Applicant: Gface GmbH, 60322 Frankfurt/Main (DE)
(72) Inventor: Yerli, Cevat, 60314 Frankfurt/Main (DE)
(74) Representative: Schmidt, Steffen

(57) **Abstract**

A user of a network system may be provided with customized information relating to geographical zones defined by said user and personal interests associated with these zones. The personal interests may be compared against selected criteria provided by a customized information provider, so to allow an efficient targeting.

## Description

### FIELD OF THE INVENTION

The invention relates to methods and systems for providing customized information to a user in a network, in particular customized information associated with geographical areas such as zones or maps defined or selected by a user.

### BACKGROUND AND STATE OF THE ART

The advent of the internet has provided a great impetus to social networking by allowing instant and efficient communication among friends and acquaintances. There is now a trend for people to gather in a variety of virtual social networks to share communal related interests. For instance, such networks may be directed at people sharing a common profession, people living in the same city, or people playing a network computer game.

Concurrent with the trend towards social networking, mobile computing is becoming ever more widespread and important, in particular among users of social networks. Hence, there remains a need to provide users of a network with customized information in accordance with the geographical areas frequented by the users, and in accordance with their interests.

### SUMMARY OF THE INVENTION

This need is addressed by a method and system for providing customized information according to the independent claims. The dependent claims relate to preferred embodiments.

A method for providing customized information to a user in a network according to the present invention comprises the steps of associating interest data with data relating to a geographical zone, said geographical zone and/or said interest data defined or selected by said user, associating customized information with said interest data and/or said geographical zone, and providing said customized information to said user.

The present invention allows the user to define and/or select a geographical zone that is relevant to the user, and to define and/or select interest data related to said geographical zone. This information may be provided to a server and may allow the server and/or third parties to provide customized information to the user in accordance with said interest data and/or said geographical zone. For instance, if a user designated an interest in shopping, the user may be informed about promotional sales taking place within the geographical zone. Alternatively, if the user is interested in food or restaurants, said customized information may be information relating to openings of new restaurants in said geographical zone, or special offers at existing restaurants in said geographical zone.

In general, a geographical zone may be any geographical zone or region. Said zone may be in a real world or in a virtual world, such as in a setting of a network computer game. For instance, a geographical zone may be the vicinity of the user's home or workplace, or any other region that the user visits frequently. Alternatively, the geographical zone may be any zone or region in the setting of a computer game that the user plays regularly, either alone or with friends over a network.

Said interest data may comprise any kind of data or information relating to an interest of said user or a group of users, such as interest in food or restaurants, fashion, or sports. Said interest may also be a common interest of members of a social network group.

The step of associating said interest data with said geographical zone may be any step of linking or relating said interest data to said geographical zone. This may also incorporate the storing of said interest data together with data relating to said geographical zone, or the processing of said interest data together with data relating to said geographical zone. Said association may be provided to a network server by said user.

In a preferred embodiment, the method comprises the steps of associating said geographical zone and/or said interest data with temporal user data, and associating said customized information with said temporal user data. Said temporal user data may be defined or selected by said user.

Said temporal user data may be any time information relating to said geographical zone and/or to said interests. For instance, temporal data may comprise a repeated occurrence, such as every day, only on Sundays, only from December to March, or one time only. This may designate the times at which a user is interested in receiving customized information relating to said geographical zone. For instance, if the geographical zone is the vicinity of the user's workplace and the interest data relates to food, the user may choose to receive customized information only at around lunchtime. Associating the customized information with said temporal user data may hence allow to provide a more accurate and more efficient targeting of users in the network.

In a preferred embodiment, the method further comprises the steps of associating an activation status with said geographical zone, and providing said customized information in accordance with said activation status.

Said activation status may be a status value that designates when the geographical zone is active and when it is inactive. Said activation status may be set by a user and/or by a provider of the network service.

In a preferred embodiment, the method further comprises the steps of determining a position of said user relative to said geographical zone, and providing said customized information in accordance with said position.

This embodiment allows to provide the user with customized information relating to said geographical zone when the user is found to be located within the geographical zone, or in the vicinity of said geographical zone. Said vicinity may be defined in terms of a predetermined distance to a selected point of interest in said geographical zone, or to a boundary of said geographical zone. For instance, a user may be provided with customized information whenever he enters said geographical zone.

In a preferred embodiment, the method further comprises the steps of receiving from a customized information provider geographical data and/or contents information, comparing said geographical data and/or contents information with data relating to said geographical zone and/or said interest data, respectively, and providing said contents information to said user if said geographical data and/or contents information matches said data relating to said geographical zone and/or interest data, respectively.

The customized information provider may be any third party that has an interest to provide said user with customized information. The customized information provider may be connected to the user via the network, or may be connected to the user indirectly via the network provider. The customized information provider may provide some geographical data relating to a geographical zone or area for which the customized information provider may want to provide users of the network with contents information, and may further provide the associated contents information. Said contents information may comprise any information or data that the customized information provider may want to distribute, or any data information that the user may want to receive as customized information.

Said geographical data and/or contents information may then be compared with the geographical zones and/or interest data provided by the user in order to determine, based on the matches, which user shall be provided with customized information, and what type of information shall be distributed.

In a preferred embodiment, the method comprises the steps of receiving from a customized information provider geographical data and/or contents information and/or temporal provider data, comparing said geographical data and/or contents information with said geographical zone and/or said interest data and/or said temporal user data, respectively, and providing said contents information to said user if said geographical data and/or said contents information and/or said temporal provider data matches said geographical zone and/or said interest data and/or said temporal user data, respectively.

The customized information provider may provide temporal provider data specifying at which times customized information shall be provided to the users in the network. Said temporal provider data may be compared with temporal user data indicating at which times a user may be interested in receiving customized information.

The matching between information and data provided by the user and information and data provided by the customized information provider may take place at a central location separate from the customized information provider, such as at the server managing the network system. This may guarantee that confidential information relating to said geographical zone and/or said interest data specified by said user is not revealed to said customized information provider.

Alternatively, the method according to the present invention may likewise comprise a step of providing said geographical zone and/or said interest information to a customized information provider.

This may allow the customized information provider to improve the quality of the targeting.

In a preferred embodiment, the method further comprises a step of providing to a customized information provider a billing cost entry associated with the providing of said customized information to said user. This may allow the network service provider to charge the customized information provider for being able to provide customized information to a user.

The method may further comprise a step of renting or auctioning a location in said geographical zone to a customized information provider.

Said network may be any network, such as the internet or a social network.

Said customized information may be promotional information and/or advertisement information.

Said customized information may comprise a location in said geographical zone, said location being provided by a customized information provider. The location may be a location at which the customized information provider may want to place an advertisement or alert or some other kind of information in the user's map.

In a preferred embodiment, the method further comprises the steps of providing geographical area data to said user over said network, receiving from said user said data relating to said geographical zone, and receiving from said user said interest data relating to said geographical zone. Said geographical zone may be defined or selected by said user from said geographical area data.

This allows said user to define or select said geographical zone from among geographical area data provided over said network. Said geographical area data may be provided to the user in terms of a map or a set of maps, or in terms of a description of a geographical area provided to the user. Said geographical zone may be a subset or a plurality of subsets of said geographical area, or any description of said subset/subsets. The user may define said geographical zone by outlining an arbitrary region on a touchscreen, by providing geographical coordinates of the zone, or by providing any other suitable description of the zone.

In a preferred embodiment, said geographical zone may be defined by at least one circle and/or by at least one polygon. Said geographical zone may in general be defined as an interior or exterior of a boundary line, which may be any straight or curved line.

Said geographical zone may also be a street or a plurality of streets, possibly including their vicinity. Said vicinity may comprise a predefined zone or area adjoining said street(s), or extending along said street(s).

Said geographical zone may also be a predefined quarter or neighborhood, either in a real world or in a virtual world.

Said geographical zone may comprise a plurality of separate sub-zones. Said sub-zones may not be directly connected.

The embodiments as described above characterize in the invention from the point of view of a server providing the network. However, the invention may equally well be characterized from the perspective of a customized information provider employing said network to provide customized information to said user.

In this instance, the invention relates to a method for providing customized information in a network, said method comprising the steps of receiving geographical area data from a server in said network, and associating contents information with said geographical area data, said contents information to be provided to a user over said network. In particular, said contents information may be provided to said user via said server.

Said server may be any server to which users are connected via said network.

In a preferred embodiment, said geographical area data comprises a geographical zone selected and/or defined by said user.

Said method may further comprise a step of receiving interest data from said server, said interest data selected and/or defined by said user.

In a preferred embodiment, the method further comprises a step of comparing said interest data with said contents information. Contents information may be provided to said user if or only if said contents information matches said interest data.

Said geographical area data may be any data relating to a geographic region in the real or in a virtual world, as described above. In particular, said geographical area data may comprise a map or a set of maps or a description of a geographical area provided to said customized information provider. Said geographical area data may relate to a geographical extension of said network, and/or may relate to geographical zones defined or selected by a single user or a plurality of users connected via said network.

In a preferred embodiment, said method further comprises the steps of receiving temporal user data from said server, and associating said contents information with said temporal user data. Said temporal user data may be data selected or defined by said user.

By incorporating temporal user data provided from said server, users may be provided with contents information in accordance with their time preferences. This allows to improve the targeting.

All the aspects and features described above for the perspective of a service provider may equally well characterize the invention from the perspective of the customized information provider, and vice versa.

The invention further relates to a server system for providing customized information to a user in a network, said system comprising means for associating interest data with data relating to a geographical zone, said geographical zone and/or said interest data defined or selected by said user, means for associating customized information with said interest data and/or said geographical zone, as well as means for providing said customized information to said user.

In a preferred embodiment, the server system further comprises means for associating said geographical zone and/or said interest data with temporal user data, as well as means for associating said customized information with the temporal user data. Said temporal user data may be defined or selected by said user.

In a preferred embodiment, the server system further comprises means for receiving from a customized information provider geographical data and/or contents information, as well as means for comparing said geographical data and/or contents information with said geographical zone and/or said interest data, respectively, and means for providing said contents information to said user if said geographical data and/or contents information matches said geographical zone and/or interest data, respectively.

The invention further relates to a system for providing customized information to a server in a network, said system comprising means for receiving geographical area data from said server, as well as means for associating contents information with said geographical area data, said contents information to be provided to a user over said network.

As described above with respect to the inventive method, this aspect characterizes the invention from the perspective of a customized information provider that provides customized information to a user via said server in said network.

The invention likewise relates to a computer-program product for storing computer-readable instructions, such that said computer-program product, when read on said computer, implements a method with some or all of the features as described above.

### DETAILED DESCRIPTION OF PREFERRED EMBODIMENTS

The features and numerous advantages of the present invention will be best understood from a detailed description of the preferred embodiments in conjunction with the accompanying drawings, in which,
FIGURE 1 illustrates a user-defined geographical zone according to an embodiment of the invention;
FIGURE 2 illustrates an input mask allowing a customized information provider to select among categories of customized information to be provided to a user;
FIGURE 3 illustrates how a customized information provider may analyze user zones to select a location for placing an advertisement in a map;
FIGURE 4 illustrates how a user may request recommendations for featured geographical zones according to an embodiment of the present invention; and
FIGURE 5 schematically illustrates how the current invention may be implemented on a mobile phone.

The invention will now be described for the specific example of a method for placing advertisements in a social network environment in which the user may define geographical zones associated with interest data.

Specific embodiments of how users may define zones and maps in a network environment are described in the related application entitled "Method and System for Associating User Interests with Zones and Maps," filed February 16, 2012, as U.S. Patent Application No. 61/599,915, which is hereby incorporated by reference in its entirety.

### (i) Establishment of Maps and Zones

The user-defined zones may represent areas in the real world, such as parts of a city, or in a virtual world, such as in the setting of a network computer game.

The user may associate a special interest to the map or zone, and may further associate said special interest with a particular time parameter. The interest(s) attached to a zone may be a single interest, a plurality of interests or an interest tree comprising a hierarchical structure of interests. The interests may be interests that are shared by all members of a social network, or may be individual interests of that specific user.

The user may select said geographical zones in order to establish correlations with other users in the network, or to receive updates on services and activities pertaining to said geographical zones. Said geographical zones may thus allow a better targeting for location-based services.

Optionally, geographical zones may be active for a certain predetermined time span only. For instance, the user may select the time setting such that a given zone is active at regular intervals, such as every day from 1 p.m. to 5 p.m., only on Sundays, only from December to March, daily from 6 p.m. to 12 p.m., etc. Alternatively, the user may specify that a defined zone is active only once, such as on a predefined day or during a predefined week of the year.

Zones can be defined in any shape that the system allows to create. For instance, zones may be circles with a predefined radius around a predefined center. Zones can likewise be formed as a rectangle or a multi-edged polygon, or in any other shape, both with straight and curved boundary lines. A user may be allowed to add to or amend a previously defined zone at a later stage so as to transform it into the desired shape. The user may likewise add or delete further zones.

The user may be connected to a server and/or to other users via a network such as the Internet, or a part of the Internet establishing a closed or open social network. The server may be any conventional server or network computer. The user may employ any conventional client computer, such as a desktop computer or mobile computer, or any other computing and/or communication device, such as a mobile phone, a smart phone, or a tablet computer.

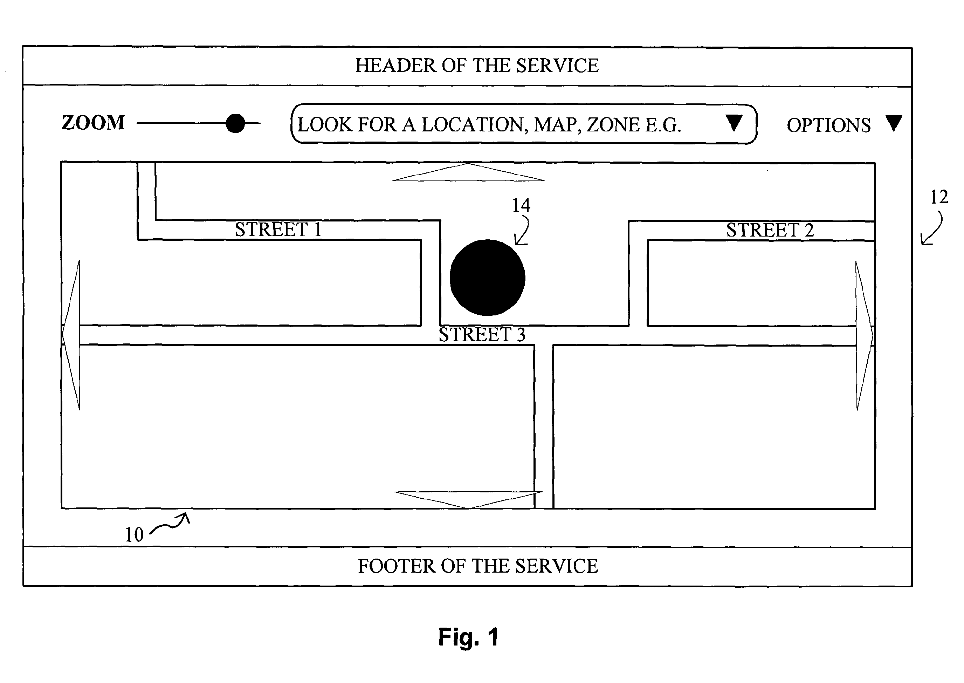

The server may provide the user with geographical area information such as a geographical map 10 or set of maps, which may be displayed on a display 12 such as a tablet display or mobile phone display, as shown in FIGURE 1. In the example displayed in FIGURE 1, the map 10 comprises a neighborhood or a plurality of streets in a city. However, any geographical map may be used. The visible indicator of a user-defined geographical zone 14 is shaded in black in FIGURE 1.

The user-defined geographical zone 14 may be defined by outlining an arbitrary region on the map 10, either in a free-hand fashion or by selecting among a plurality of predefined shapes, such as circles, rectangles, and multi-edged polygonal shapes.

A navigation tool may allow the user to zoom in and out of the map. The display likewise provides a search mask that allows the user to search a location in the map and/or in said user-defined zone. A graphical icon indicates a selected location on the map. This may be the current position of the user. Geographical coordinates of the user may for instance be obtained by employing a GPS-system or any other kind of localization system, as conventionally implemented in many mobile communication and computation devices. However, the graphical icon may likewise denote some other predefined or selected location unrelated to the present location of the user.

The map displayed in FIGURE 1 comprises a further icon that allows to create a new geographical zone at a specified location. The user may move the icon anywhere on the map 10 and may then click on the map 10 to open a menu, where the user can either create a new zone or, alternatively, apply an existing zone to a new additional location.

The user may specify a number of parameters in order to define a new zone. For instance, the user may designate a name or title for the new zone. The user may also define the size of the zone. For instance, the zone may be defined in terms of a radius, such as a 1 kilometer radius, around a selected location on the map 10. The radius may be selected from among a predefined choice of radius values, or may be defined by the user.

The user may designate at least one interest connected to the newly defined zone. This may be achieved by setting relevant filter values or by finding fitting items. The user may define one or more interests for the zone. He may select from a list of interests, which may be based on former input by the same user or based on recommendations provided by the server. Interests may relate to sports, restaurants, shopping, or any other kind of interests the user may want to associate with the new geographical zone.

The user may also decide when the newly defined zone should be used, for instance by designating the times when the zone should be active, and whether and when the zone should be used in combination with the user position.

Certain geographical zones may be interesting for the user only at certain predefined times. This may be on a daily, weekly, monthly or other regular basis. For instance, if the zone is the user's home-zone and the user has designated an interest in food, he may select respective time windows when to be informed with restaurant updates, such as around noon and in the evening. However, the user may also specify zones that are active only at a given designated one time, for instance for the duration of a weekend or week. This may be useful if the user is on vacation, and the zone is a designated zone around his hotel.

The zone may be selected to be active only in connection with the user's presence in the zone. For instance, the position of the user may be tracked, and the zone may be activated only if a user approaches a boundary of the zone, or enters the zone, or is detected within the zone. Alternatively, the zone may be activated if the user is not in the zone, so that the user may receive updates while being away from the zone. The zone might also be activated based on whether predefined other users are present in the zone, so that the user may be informed about the location of a friend or acquaintance in the zone.

The user may further define points of interest in the zone, such as restaurants or shops in which he takes a particular interest. A zone need not necessarily be simply connected, but may likewise be a combination of a plurality of sub-zones or locations. For instance, a zone can be defined as the plurality of all locations of a specific restaurant type or restaurant chain. As an example, five separate locations of such restaurants may be combined into a common zone.

To add another location to a zone, the user can either mark it on the map 10, or may specify the location by selecting the location from a list that may be provided by the server or may be pre-prepared by the user.

In general, any user may define a plurality of different zones. When employed in a network setting, the system according to the present invention may be adapted to display, on the user's computer display 12, zones defined by selected other users in the network, such as friends or acquaintances. All these further users may define their zones locally on their computer device. This information will then be provided to the central server, and can be distributed from there within the network. A button called "options" may allow the user to access a filter specifying which of the zones should be displayed. For instance, the user may choose to display only his own zones, or may choose to display some or all of the zones of selected other users of the network. The user may likewise copy a zone of another user to his own zones. The user may also share and recommend a zone to other users.

A user that receives a recommendation of a zone from another user will be provided with an icon designating information about the recommended zone, such as the number of locations in said zone or the geographical extension of said recommended zone.

The present invention is particularly effective when the client system is adapted to display a graphical view of the geographical area information provided from the server, and of the geographical zones selected by the user. However, the invention is not so limited and may also be employed if the client's system does not support a map-based view. In this case, the user may define a geographical zone by providing a description of said zone, for instance by providing an address and specifying a circle of a predetermined radius around said location. Recommendations based on the interests defined by the user may then be displayed at the client's system as a list of recommendations. This list may be filtered by enabling and disabling the user zones.

### (ii) Providing Customized Information

The user-defined zones may allow an advertiser to provide customized advertisements or promotions to said user. The advertiser may select an advertisement in accordance with geographical data and the interest data specified by the user, which allows for customized or targeted advertising.

Advertisers may define when and where a specific advertisement is displayed on a geographical display employed by a user. In particular, advertisers may specify in which geographical zone defined by a user an advertisement may be displayed, or at what times and for how long.

The advertisement may be displayed in accordance with an activation status of said geographical zone. For instance, the geographical zone may be activated only if the user is currently located inside the geographical zone.

The advertisement may be tailored to the interest data associated with that particular zone. For instance, an advertisement may be displayed only if the interests associated with this particular zone match a set of conditions defined by the advertiser. In particular, an advertisement may be displayed if the advertisement falls into a category registered as an interest for that user and that geographical zone, such as shopping, food, or sports.

The comparison of the advertisement information with the user-defined interests may take place at the server location. Alternatively, the interest data relating to a user or a group of users may be provided to the advertiser so that the comparison may be performed at the location of the advertiser. The advertiser may either be part of said network, or may be connected to said network via said server.

Based on a systematic analysis of user interests and the matching with the advertisement targeting data, an advertiser may request meaningful locations that may be added to the targeting. The analysis may take into account demographical and personal data of the users as well as statistical information related to the network, such as the relative frequency with which a specific geographical zone or location inside said zone is visited by users of the network.

The invention may allow the provider of the social network to rent or auction virtual advertisement space related to user zones. Renting "virtual real estate" can be exclusive to one user or advertiser, or may also be non-exclusive in order to allow different advertisers to use the same advertising space for different targeting. The rules for renting may be set by the provider of the social network. Renting can be limited in time. Depending on the settings chosen by the provider, the rent or minimum bid may depend on the demand, on the number of geographical zones comprising a specific advertisement location, or on the relative frequency with which said zones or said location are visited by the users.

As an aspect of the invention, users may be offered special bargains and deals. For instance, a user that follows a link provided by the advertiser in the geographical zone of that user may get a ten percent discount on his purchases.

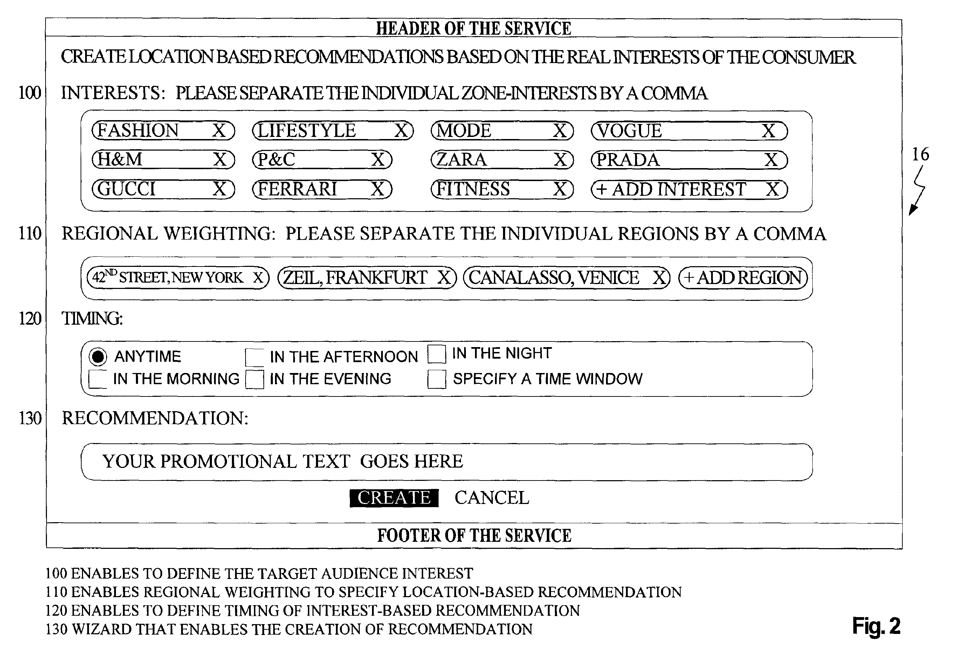

FIGURE 2 illustrates an input mask 16 that an advertiser may employ to select categories for which he would like to provide advertisements and which he would like to have compared against the user's designated interests (100). Categories may include fashion, fitness, lifestyle or any other categories into which advertisements may commonly be classified. Categories may be chosen from a list of predefined categories, as illustrated in FIGURE 2, but may likewise be defined or entered freely by the advertiser.

The advertiser may further define at which location an advertisement shall be displayed (110). The examples illustrated in FIGURE 2 refer to real world locations. However, the locations may also refer to virtual locations, such as locations in the setting of a network computer game.

The advertiser may further define at what time(s) the advertisement shall be displayed, for instance by specifying time periods or time cycles (120). Finally, the advertiser may also define the content of the advertisement (130). He may add an image, a video, a promotional text, animations etc. for display in the map of the user at the selected location.

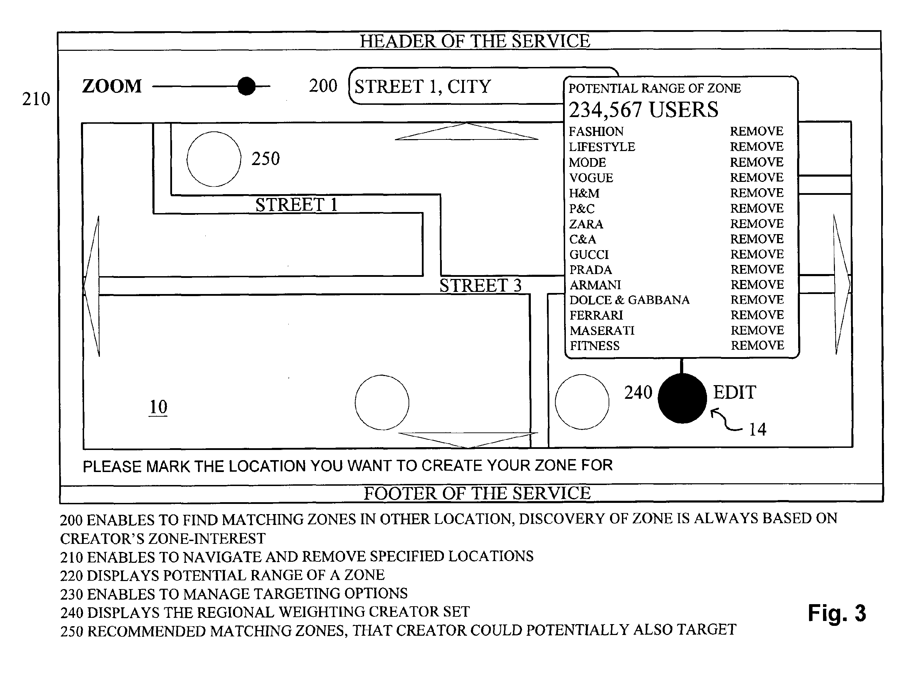

As illustrated in FIGURE 3, the advertiser may analyze the geographical zones defined by the users and the associated interests to optimize the positioning of his advertisements. He may specify a location that he considers for advertisement display (200). He may also view all the locations presently connected to his advertisements (210), delete them or click on them to jump to that specific location. Each displayed zone may be associated with a value or factor associated with the number of users that include the selected location into one of their geographical zones with a relevant interest (220). The advertiser may edit and adapt the interests of the user to improve the targeting (230).

The network provider may analyze the geographical zones defined in the geographical area in which the advertiser has expressed an interest and may suggest to the advertiser all those zones that match the set of criteria specified by the advertiser (250), as described above with reference to FIGURE 2.

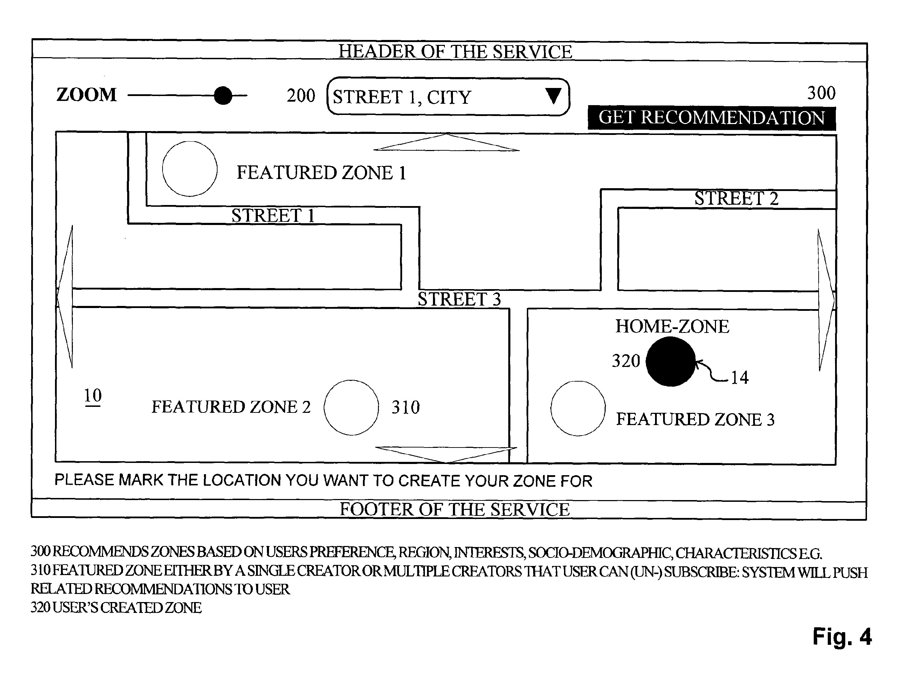

As illustrated in FIGURE 4, the user may request recommendations for featured zones (300). These recommendations may be based on the user interests and the interests set for the featured zones. Recommendations may also take into account the geographical area associated with the featured zone as well as socio-demographic characteristics associated with that zone.

Featured zones may be displayed with the corresponding name or a name of another user responsible for that zone (310). The geographical zones defined by the user (320) are likewise displayed on the map.

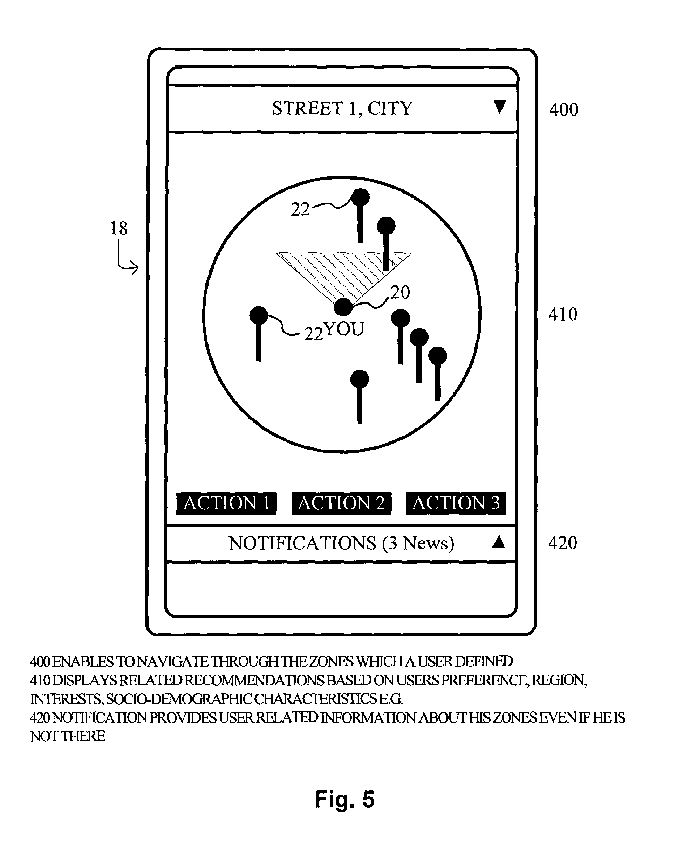

An example of an implementation of the invention on a mobile telephone device 18 is illustrated in FIGURE 5. The user has activated the GPS functionality on his mobile device 18, and can see on the display his own current location 20 together with recommended zones or featured zones 22 in his immediate vicinity. The application shows that the user is currently located in "zone 1" (400). This zone may be a zone created by the user, and is associated with specific interests of the user. If these interests match a certain advertisement, related recommendations are provided to the user. These recommendations are displayed as "action 1," "action 2," and "action 3" on the display of the mobile phone 18 (410).

The system may also inform the user of updates or notifications related to one or several other of his geographical zones (420).

The description of the preferred embodiments and the accompanying drawings merely serve to illustrate the invention and the beneficial effects associated therewith, but should not be understood to imply any limitation. The scope of the invention is to be determined solely based on the appended set of claims.

### Reference Signs

| | |
|---|---|
| 10 | geographical map |
| 12 | computer display |
| 14 | user-defined geographical zone |
| 16 | advertiser input mask |
| 18 | mobile phone |
| 20 | current user position |
| 22 | featured zones |
| 100 | option to select target audience interest |
| 110 | option for regional weighting to specify location-based recommendation |
| 120 | option to define timing of interest-based recommendation |
| 130 | wizard that enables the creation of the recommendation |
| 200 | option for finding matching zones in other location |
| 210 | option to navigate and remove specified locations |
| 220 | display of potential range of a zone |
| 230 | option to manage targeting options |
| 240 | displays the regional weighting creator set |
| 250 | recommended matching zones that creator could potentially also target |
| 300 | recommends zones, based on users preference, region, interests, socio-demographic characteristics etc. |
| 310 | name of featured zone |
| 320 | user's created zone |
| 400 | option for navigating through the user-defined zones |
| 410 | display of related recommendations, based on users preference, region, interest, socio-demographic characteristics etc. |
| 420 | notification that provides user related information about his zones |

## Claims

1. A method for providing customized information to a user in a network, said method comprising the steps of:
associating interest data with a geographical zone, said geographical zone and/or said interest data defined or selected by said user;
associating customized information with said interest data and/or said geographical zone; and
providing said customized information to said user.

2. The method according to claim 1, further comprising the steps of:
associating said geographical zone and/or said interest data with temporal user data, said temporal user data defined or selected by said user; and
associating said customized information with said temporal user data.

3. The method according to claim 1 or 2, further comprising one or more of the steps of:
associating an activation status with said geographical zone;
providing said customized information in accordance with said activation status;
determining a position of said user relative to said geographical zone; and
providing said customized information in accordance with said position.

4. The method according to one of the preceding claims, further comprising the steps of:
receiving from a customized information provider geographical data and/or contents information;
comparing said geographical data and/or contents information with said geographical zone and/or said interest data, respectively; and
providing said contents information to said user if said geographical data and/or said contents information matches said geographical zone and/or said interest data, respectively.

5. The method according to claim 2, further comprising the steps of:
receiving from a customized information provider geographical data and/or contents information and/or temporal provider data;
comparing said geographical data and/or contents information and/or temporal provider data with said geographical zone and/or said interest data and/or said temporal user data, respectively; and
providing said contents information to said user if said geographical data and/or said contents information and/or said temporal provider data matches said geographical zone and/or said interest data and/or said temporal user data, respectively.

6. The method according to one of the preceding claims, further comprising at least one of the steps of:
providing said geographical zone and/or said interest information to a customized information provider;
providing to a customized information provider a billing cost entry associated with the providing of said customized information to said user; and
renting or auctioning a location in said geographical zone to a customized information provider.

7. The method according to one of the preceding claims, wherein said customized information comprises a location in said geographical zone, said location being provided by a customized information provider.

8. A method for providing customized information in a network, said method comprising the steps of:
receiving geographical area data from a server in said network; and
associating contents information with said geographical area data, said contents information to be provided to a user over said network.

9. The method according to claim 8, further comprising the steps of:
receiving interest data from said server, said interest data selected and/or defined by said user; and
comparing said interest data with said contents information.

10. The method according to claim 8 or 9, further comprising the steps of:
receiving temporal user data from said server; and
associating said contents information with said temporal user data.

11. A server system for providing customized information to a user in a network, said system comprising:
means for associating interest data with a geographical zone, said geographical zone and/or said interest data defined or selected by said user;
means for associating customized information with said interest data and/or said geographical zone; and
means for providing said customized information to said user.

12. The server system according to claim 11, further comprising:
means for associating said geographical zone and/or said interest data with temporal user data, said temporal user data defined or selected by said user; and
means for associating said customized information with said temporal user data.

13. The server system according to claim 11 or 12, further comprising:
means for receiving from a customized information provider geographical data and/or contents information;
means for comparing said geographical data and/or contents information with said geographical zone and/or said interest data, respectively; and
means for providing said contents information to said user if said geographical data and/or
contents information matches said geographical zone and/or interest data, respectively.

14. A system for providing customized information to a server in a network, said system comprising:
means for receiving geographical area data from said server; and
means for associating contents information with said geographical area data, said contents information to be provided to a user over said network.

15. A computer-program product for storing computer-readable instructions, such that said computer-program product, when read on said computer, implements a method according to one of the claims 1 to 10.
